# EUROPEAN PATENT APPLICATION

(11) **EP 4 685 023 A1**
(43) Date of publication of application: **28.01.2026**
(21) Application number: 24190653.6
(22) Date of filing: 24.07.2024
(51) Int. Cl.: B60T 17/22, F16D 65/14, F16D 66/00, F16D 127/02, F16D 127/06

(54) **ACTUATOR SYSTEM OF A BRAKE OF A VEHICLE AND METHOD FOR MONITORING AN OPERATION OF AN ACTUATOR ELEMENT OF THE ACTUATOR SYSTEM**

(71) Applicant: KB Intellectual Property GmbH & Co. KG, 82049 Pullach (DE)
(72) Inventor: KAKONYI, Robert, 6300 Kalocsa (HU)

(57) **Abstract**

An actuator system (2) of a brake system of a vehicle (1), in particular, of a railway vehicle, wherein the actuator system (2) is configured to provide a braking force for braking the vehicle (1), is provided. The actuator system (2) comprises an actuator (3) having an actuator device participating in generating or releasing the braking force, and a detection device (7) configured to detect a reaction caused by an action of the actuator device during a generation or a releasing of the braking force and to output a signal corresponding to the reaction. The actuator system (2) comprises a control device (11) configured to control the actuator device and comprising an evaluation device (12) configured to receive the signal from the detection device (7) and to evaluate the reaction by comparing a chronological sequence of the signal with a predetermined chronological sequence.

## Description

The invention relates to an actuator system of a brake of a vehicle and a method for monitoring the operation of an actuator element of the actuator system, in particular, it relates to an actuator system of the brake of a railway vehicle.

Nowadays, in actuator systems of brakes comprising safety relevant components, internal self-checks of the safety relevant components have to be performed in order to ensure functionality of these components and to ensure a safe operation of the actuator systems of the brakes. However, these self-checks have the drawbacks that specific routines for these self-checks must be specifically initiated and have to be performed in predefined intervals, therefore, hidden failures of these safety relevant components cannot be detected immediately but only after the expiration of these intervals.

Hence, the object underlying the invention is to remedy the above-mentioned drawbacks and to provide an actuator system of a brake of a vehicle which is able to detect failure of safety relevant components without performing specific internal self-checks.

This object is achieved by an actuator system of claim 1, a brake system of claim 7, and a method of claim 8. Advantageous further developments of the invention are included in the dependent claims.

According to an aspect of the invention, an actuator system of a brake system of a vehicle, in particular of a railway vehicle, wherein the actuator system is configured to provide a braking force for braking the vehicle, comprises an actuator device participating in generating or releasing the braking force and a detection device configured to detect a reaction caused by an action of the actuator device during a generation or a releasing of the braking force and to output a signal corresponding to the reaction. The actuator system further comprises a control device configured to control the actuator device and comprising an evaluation device configured to receive the signal from the detection device and to evaluate the reaction by comparing a chronological sequence of the signal with a predetermined chronological sequence.

In this context, "participating in generating or releasing the braking force" means that the actuator device generates the braking force and/or enables the generation of the braking force.

By the detection of the reaction caused by the action of the actuator device during the generation or the releasing of the braking force, i.e., during the usual operation, and by evaluating this reaction, an operation, i.e., a functionality or a failure, of safety relevant components for generating the braking force can be monitored and validated anytime without performing additional self-checks.

In an advantageous implementation of the actuator system, the actuator further comprises a housing and a locking device, wherein the actuator device comprises a first actuator element and a second actuator element, the first actuator element is at least partially accommodated in the housing, and the first actuator element is configured to perform the generation or releasing of the braking force. The locking device comprises the second actuator element at least partially accommodated in the housing, wherein the locking device is configured to lock a component of the first actuator element with respect to the housing, and the detection device is configured to detect a reaction caused by an action of the second actuator element and to output a signal corresponding to the reaction.

According to a further advantageous implementation of the actuator system, the detection device is configured to detect the reaction, wherein the reaction comprises bumping of a moving part of the locking device to a housing of the locking device and propagating a mechanical wave generated by the bumping to the detection device via the housing of the actuator.

In an advantageous implementation of the actuator system, the detection device is also configured to detect a reaction caused by the first actuator element during the generation or the releasing of the braking force.

In a yet further advantageous implementation of the actuator system, the first actuator element comprises a rotating body configured to collaborate with a spindle to generate or release the braking force, the second actuator element is configured to initiate the action and the action comprises a motion of a moving part of the locking device towards the rotating body, and the reaction comprises pushing or pulling the rotating body by the locking device.

According to a further advantageous implementation of the actuator system, the locking device comprises an electromagnet configured to drive a motion of the moving part of the locking device for locking or releasing the rotating body with respect to the housing of the actuator.

According to a further aspect of the invention, a brake system comprising an above-described actuator system is provided.

According to a further aspect of the invention, a method for monitoring operation of an actuator device of an actuator system comprises the steps: by the control device, initiating the action of the actuator device, for participating in generating or releasing the braking force, for causing the reaction, detecting the reaction by the detection device during the generation or releasing of the braking force and outputting the signal corresponding to the reaction, receiving the signal by the evaluation device and evaluating the reaction by comparing the chronological sequence of the signal with the predetermined chronological sequence.

In an advantageous further development of the method, the action comprises a motion of a moving part of the locking device, and the reaction comprises a bumping of the moving part of the locking device to a housing of the locking device and propagating a mechanical wave, generated by the bumping, to the detection device via the housing of the actuator.

According to a further advantageous further development of the method, the action comprises a motion of a moving part of the locking device, and the reaction comprises pushing or pulling of a rotating body of the first actuator element.

In a further advantageous further development of the method, the motion of the component of the locking device causes a releasing or a locking of the component of the first actuator element with respect to the housing.

Subsequently, the invention is elucidated by means of embodiments referring to the attached drawings.

In particular,
- Fig. 1: shows a principle illustration of a brake system comprising an actuator system according to the invention; and
- Fig. 2: shows diagrams showing a relationship between actions and reactions in the actuator system.

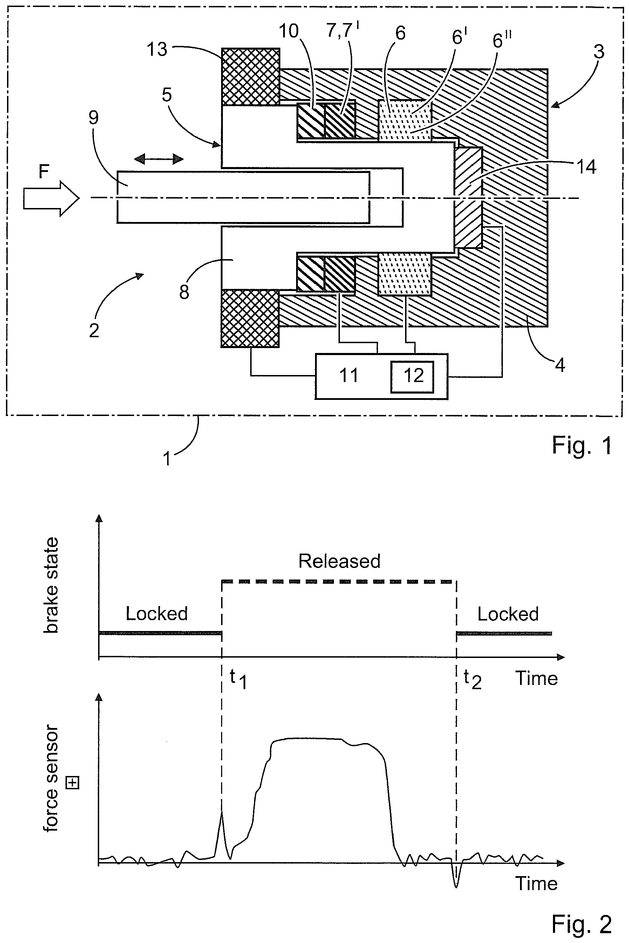

Fig. 1 shows a principle illustration of a brake system 1 comprising an actuator system 2 according to an embodiment of the invention.

The brake system 1 comprises an actuator system 2 which, in turn, comprises an actuator 3. The actuator 3 comprises a housing 4, a first actuator element 5, a locking device 6 and a detection device 7.

The actuator system 2 provides a braking force for braking a vehicle, in particular a railway vehicle.

The first actuator element 5 is at least partially accommodated in the housing 4. Further, the first actuator element 5 comprises a rotating motor comprising a stator 13 and a rotating body 8, forming a rotor element, and a spindle 9. The first actuator element 5 participates in generating or releasing the braking force. The rotating body 8 and the spindle 9 collaborate in order to generate or release the braking force. By rotating the rotating body 8 by means of the stator 13, as illustrated by a motion of the spindle 9 by means of a double arrow, the first actuator element 5 generates or releases the braking force depending on the rotation direction of the rotating body 8. In alternative embodiments, the first actuator element 5 does not comprise the stator 13, the rotating body 8, and the spindle 9 but other components, such as a pneumatic cylinder or a hydraulic cylinder, are provided for generating or releasing the braking force.

The locking device 6 comprises a second actuator element 6' which is at least partially accommodated in the housing 4 and a moving part 6" which moves such that the locking device 6 locks a component of the first actuator element 5 with respect to the housing 4 by a motion of a component of the locking device 6. Thereby, a motion of the rotating body 8 is prevented and a status of the braking force generated by the actuator 3 is maintained. The locking device 6 comprises an electromagnet as being the second actuator element 6' which drives the motion of the moving part 6" into an unlocking position for releasing the rotating body 8 with respect to the housing 4. In alternative embodiments, the electromagnet is provided for locking the rotating body 8 with respect to the housing 4, or the locking device 6 does not comprise the electromagnet but another actuator element for locking the component of the first actuator element 5 with respect to the housing 4, e.g., a motor or a pneumatic cylinder is provided.

An actuator device is defined as comprising the first actuator element 5 and the second actuator element 6'. In alternative embodiments, the actuator device comprises only one of these actuator elements.

The actuator 3 further comprises a force sensor 7' as being a component of the detection device 7 and an axial bearing 10. A counter force F generated due to the braking force and applied to the spindle 9 supports against the housing 4 via the rotating body 8, the axial bearing 10 and the force sensor 7'.

The detection device 7 detects a reaction caused by an action of the first actuator element 5 during the generation or the releasing of the braking force or caused by an action of the second actuator element 6' during locking of the component of the first actuator element 5 and outputs a signal corresponding to the reaction. In particular, the detection device 7 comprises the force sensor 7' which outputs a signal corresponding to a force applied to the force sensor 7'. Nevertheless, in alternative embodiments, the detection device 7 may comprise another sensor, such as a motion sensor.

Furthermore, the actuator system 2 comprises a rotation sensor 14. This rotation sensor 14 is configured to detect the rotation of the rotating body 8 as a reaction caused by the rotation of the rotating body 8 of the rotating motor.

The actuator system 2 further comprises a control device 11. The control device 11 is connected to the first actuator element 5, the second actuator element 6', the detection device 7, and the rotation sensor 14. Further, the control device 11 controls the first actuator element 5 and the second actuator element 6' according to an input into the control device 11 from an external controller and incoming signals from the force sensor 7' of the detection device 7 and the rotation sensor 14. The control device 11 comprises an evaluation device 12. The evaluation device 12 receives the signal from the detection device 7 and the rotation sensor and evaluates the reaction by comparing an actual chronological sequence of the signal with a predetermined chronological sequence. In alternative embodiments, the rotation sensor can be omitted. In further alternative embodiments, the control device 11 comprises a memory device, in particular, for recording deviations of the actual chronological sequence of the signal from the predetermined chronological sequence.

In operation, for generating the braking force and for monitoring an operation of the actuator elements, a procedure shown in Fig. 2 is executed.

Coming from a brake state in which the rotating body 8 of the first actuator element 5 is locked by the locking device 6, the rotating body 8 is released by the locking device 6 for allowing a motion of the rotating body 8 for generating or releasing the braking force in the point of time t₁. Subsequently, for generating or releasing the braking force, the rotating body 8 is maintained in the released state up to the point of time t₂. In the point of time t₂, the rotating body 8 is locked again by the locking device 6.

When releasing the rotating body 8 in the point of time t₁, the force sensor 7' detects a force, in particular, a positive force pulse generated by the releasing procedure and outputs a positive force signal pulse. The force is generated by a minimum axial motion of the rotating body 8, i.e., a pushing or pulling of the rotating body 8, by the moving part 6" of the locking device 6, when the moving body 6" is moved away from the rotating body 8 and a clamping is released. On the other hand, when locking the rotating body 8 in the point of time t₂, the force sensor 7' detects a negative force pulse generated by the locking procedure and outputs a negative force signal pulse. This negative force pulse is generated by a minimum axial motion of the rotating body 8, i.e., a pushing or pulling of the rotating body 8, by the moving part 6" of the locking device 6, when the moving body 6" impinges on the rotating body 8. In alternative embodiments, there can be the physical phenomenon that a bumping of the moving part 6" to a housing of the locking device 6 generates a mechanical wave which is propagated to the force sensor 7' via the housing 4 of the actuator 3 and detected by the force sensor 7'.

The course of a force sensor signal between the points of time t₁ and t₂ illustrates the force onto the force sensor 7' by the counter force F when the braking force is generated and/or released.

Hence, initially, an action of the actuator device, for participating in generating or releasing the braking force, by the control device for causing the reaction is initiated. In this context, "for participating in generating or releasing the brake force" means that the actuator element either directly generates or releases the braking force as it is performed by the first actuator element 5 or the actuator element enables the generation or the release of the braking force by releasing the locking of the component of the first actuator element 5, i.e., the rotating body 8, with respect to the housing 4 as it is performed by the second actuator element 6'. The action is the motion of the component of the locking device 6, in particular, of the moving part 6" of the locking device 6. In alternative embodiments, the action can be the rotating of the rotating body 8 of the first actuator element 5.

During the generation or the releasing of the braking force, the reaction is detected by the force sensor 7' and the force sensor 7' outputs the signal corresponding to the reaction. As mentioned above, the reaction is either a pushing or pulling of the rotating body 8 in its axial direction or the bumping of the moving part 6" to the housing of the locking device 6 and the propagating of the mechanical wave to the force sensor 7' or a combination thereof. Further, alternatively, the reaction can be a motion of the components of the actuator 3 detected by a motion sensor.

The signal outputted by the first sensor 7 is received by the evaluation device 12 of the control device 11 and the reaction is evaluated by comparing the chronological sequence of the signal with the predetermined chronological sequence. The predetermined chronological sequence of the signal is determined during a correct function of the actuator 3. Therefore, a deviation of an actual chronological sequence from the predetermined chronological sequence gives the hint that the operation of at least one of the actuator elements participating in this operation does not work properly.

According to the same principle, in an alternative embodiment, the chronological sequence of the signals from the rotation sensor 14 is compared to a predetermined chronological sequence, independently from the signals from the force sensor 7', in order to detect a malfunction of the rotation sensor 14 or of the first actuator element 5.

If the deviation of the actual chronological sequence from the predetermined chronological sequence is ascertained, an according information is outputted by the control device. Alternatively, the information is stored in a memory device for being readout in a defined point of time, e.g., during maintenance. Therefore, if, for example, one of the actuator systems is determined to be defect due to the deviation, it is possible to maintain operation of the railway vehicle since the remaining brakes can assume the function of the defect brake and, during the next maintenance, the actuator system concerned can be checked, repaired, or exchanged.

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

### LIST OF REFERENCE SIGNS

- 1: brake system
- 2: actuator system
- 3: actuator
- 4: housing
- 5: first actuator element
- 6: locking device
- 6': second actuator element
- 6": moving part
- 7: detection device
- 7': force sensor
- 8: rotating body
- 9: spindle
- 10: axial bearing
- 11: control device
- 12: evaluation device
- 13: stator
- 14: rotation sensor

## Claims

1. An actuator system (2) of a brake system of a vehicle (1), in particular of a railway vehicle, wherein the actuator system (2) is configured to provide a braking force for braking the vehicle (1), the actuator system (2) comprises an actuator (3) having:
an actuator device participating in generating or releasing the braking force, and
a detection device (7) configured to detect a reaction caused by an action of the actuator device during a generation or a releasing of the braking force and to output a signal corresponding to the reaction, wherein
the actuator system (2) comprises a control device (11) configured to control the actuator device and comprising an evaluation device (12) configured to receive the signal from the detection device (7) and to evaluate the reaction by comparing a chronological sequence of the signal with a predetermined chronological sequence.

2. The actuator system (2) of claim 1, wherein the actuator (3) further comprises:
a housing (4), and
a locking device (6), wherein
the actuator device comprises a first actuator element (5) and a second actuator element (6'),
the first actuator element (5) is at least partially accommodated in the housing (4), and the first actuator element (5) is configured to perform the generation or the releasing of the braking force,
the locking device (6) comprises the second actuator element (6') at least partially accommodated in the housing (4), wherein the locking device (6) is configured to lock a component of the first actuator element (5) with respect to the housing (4), and
the detection device (7) is configured to detect a reaction caused by an action of the second actuator element (6') and to output a signal corresponding to the reaction.

3. The actuator system (2) of claim 2, wherein
the detection device is configured to detect the reaction and the reaction comprises bumping of a moving part (6") of the locking device (6) to a housing of the locking device (6) and propagating a mechanical wave generated by the bumping to the detection device (7) via the housing (4) of the actuator (3).

4. The actuator system (2) of claim 2 or 3, wherein
the detection device (7) is also configured to detect a reaction caused by the first actuator element (5) during the generation or the releasing of the braking force.

5. The actuator system (2) of anyone of the claims 2 to 4, wherein
the first actuator element (5) comprises a rotating body (8) configured to collaborate with a spindle (9) to generate or release the braking force,
the second actuator element (6') is configured to initiate the action and the action comprises a motion of a moving part (6") of the locking device (6) towards the rotating body (8), and
the reaction comprises pushing or pulling the rotating body (8) by the locking device (6).

6. The actuator system (2) of claim 5, wherein
the locking device (6) comprises an electromagnet configured to drive a motion of the moving part (6") of the locking device (6) for locking or releasing the rotating body (8) with respect to the housing (4) of the actuator (3).

7. A brake system (1) comprising an actuator system according to anyone of the preceding claims.

8. A method for monitoring an operation of an actuator device of an actuator system (2) of anyone of the preceding claims, the method comprising the steps:
by the control device (11), initiating the action of the actuator device, for participating in generating or releasing the braking force for causing the reaction;
detecting the reaction by the detection device (7) during the generation or releasing of the braking force and outputting the signal corresponding to the reaction;
receiving the signal by the evaluation device (12) and evaluating the reaction by comparing the chronological sequence of the signal with the predetermined chronological sequence.

9. The method of claim 8 executed by an actuator system (2) according to anyone of claims 2 to 6, wherein
the action comprises a motion a moving part (6") of the locking device (6), and
the reaction comprises a bumping of the moving part (6") of the locking device (6) to a housing of the locking device (6) and propagating a mechanical wave, generated by the bumping, to the detection device (7) via the housing (4) of the actuator (3).

10. The method of claim 8 or 9, wherein
the action comprises a motion of a moving part (6") of the locking device, and
the reaction comprises pushing or pulling of a rotating body (8) of the first actuator element (5).

11. The method of anyone of claims 9 or 10, wherein
the motion of the locking device causes a releasing or a locking the component of the first actuator element (5) with respect to the housing (4).
